# EUROPÄISCHE PATENTANMELDUNG

(11) **EP 2 210 803 A2**
(43) Veröffentlichungstag der Anmeldung: **28.07.2010**
(21) Anmeldenummer: 10150315.9
(22) Anmeldetag: 08.01.2010
(51) Int. Cl.: B62K 11/08, B62K 19/30, B62M 6/90

(54) **Akkueinheit für ein Elektromotorrad sowie Elektromotorrad**

(30) Priorität: 21.01.2009 DE 102009000360
(71) Anmelder: Christ, Markus, 87700 Memmingen (DE)
(72) Erfinder: Christ, Markus, 87700 Memmingen (DE)
(74) Vertreter: Reinhard - Skuhra - Weise & Partner GbR

(57) **Zusammenfassung**

Die vorliegende Erfindung schafft eine Akkueinheit (13) für ein Elektromotorrad (1), mit einem Akku (13a) zur Bereitstellung von Antriebsenergie an einen Antrieb (14) des Elektromotorrads (1), und einem Gehäuse (15), in welchem der Akku (13a) angeordnet ist, wobei das Gehäuse (15) für ein Einschieben der Akkueinheit (13) in einen Aufnahmeschacht (20) des Elektromotorrads (1) und ein Herausziehen aus demselben geeignet ausgebildet ist.

## Beschreibung

Die vorliegende Erfindung betrifft eine Akkueinheit für ein Elektromotorrad sowie ein Elektromotorrad mit einer derartigen Akkueinheit.

Obwohl auf beliebige Elektromotorräder anwendbar, werden die vorliegende Erfindung sowie die ihr zugrundeliegende Problematik in Bezug auf ein Motocross-Motorrad mit Elektroantrieb näher erläutert.

Motocross-Motorräder mit Elektroantrieb erfreuen sich zunehmender Beliebtheit wegen der von ihnen ausgehenden, im Vergleich zu Motocross-Motorrädern mit Verbrennungsantrieb stark verringerten Lärmbelästigung sowie auch wegen des Umstands, dass Motocross-Motorräder mit Elektroantrieb abgasfrei sind. Außerdem weisen Motocross-Motorräder mit Elektroantrieb ein sehr hohes Drehmoment, insbesondere in niedrigen Drehzahlbereichen auf, was einen hohen Fahrspaß mit sich bringt.

Bei der Anmelderin bislang intern bekannten Motocross-Motorrädern hat es sich als nachteilig herausgestellt, dass diese mit einem fest installierten Akku zur Bereitstellung von Antriebsenergie an den Antrieb des Elektromotorrads vorgesehen sind. Dies führt zu langen Wartezeiten für den Fahrer, während der Akku wiederaufgeladen wird.

Es ist daher Aufgabe der vorliegenden Erfindung, eine Akkueinheit und/oder ein Elektromotorrad bereitzustellen, welche bzw. welches den vorstehend genannten Nachteil vermeidet.

Erfindungsgemäß wird diese Aufgabe durch eine Akkueinheit mit den Merkmalen des Patentanspruchs 1 und/oder durch ein Elektromotorrad mit den Merkmalen des Patentanspruchs 6 gelöst.

Demgemäß wird eine Akkueinheit für ein Elektromotorrad bereitgestellt. Diese Akkueinheit weist einen Akku zur Bereitstellung von Antriebsenergie an einen Antrieb des Elektromotorrads sowie ein Gehäuse, in welchem der Akku angeordnet ist, auf. Das Gehäuse ist für ein Einschieben der Akkueinheit in einen Aufnahmeschacht des Elektromotorrads und ein Herausziehen aus demselben geeignet ausgebildet.

Weiterhin wird ein Elektromotorrad mit einem Aufnahmeschacht und einer erfindungsgemäßen Akkueinheit bereitgestellt, welche in den Aufnahmeschacht einschiebbar und aus diesem herausziehbar ist.

Die der vorliegenden Erfindung zugrundeliegende Idee besteht darin, ein Schnellwechselsystem auszubilden, so dass eine verbrauchte Akkueinheit schnell und einfach gegen eine frisch geladene Akkueinheit ausgetauscht werden kann. Somit können Wartezeiten für ein Wiederaufladen der verbrauchten Akkueinheit auf Seiten des Fahrers vermieden werden.

In den Unteransprüchen finden sich vorteilhafte Ausgestaltungen und Verbesserungen der Erfindung.

Gemäß einer bevorzugten Weiterbildung der erfindungsgemäßen Akkueinheit weist das Gehäuse einen im Wesentlichen quaderförmigen äußeren Umriss auf, welcher an vier zusammenhängenden Kanten abgeschrägt ist. Der Umriss verjüngt sich also vorteilhaft zu einer Seite hin. Dies ist für eine raumtechnische Integration desselben in die Rahmenstruktur des Elektromotorrads günstig.

Gemäß einer weiter bevorzugten Weiterbildung der erfindungsgemäßen Akkueinheit weist diese einen fest installierten Stecker oder eine fest installierte Buchse auf, welcher bzw. welche beim Einschieben der Akkueinheit in den Aufnahmeschacht selbsttätig mit einer fest installierten, korrespondierenden Buchse bzw. einem fest installierten, korrespondierenden Stecker des Aufnahmeschachts für ein elektrisches Verbinden der Akkueinheit mit dem Antrieb in Eingriff kommt und sich beim Herausziehen aus dem Aufnahmeschacht selbsttätig löst. Mittels dieser Weiterbildung wird garantiert, dass die elektrischen Komponenten des Elektromotorrads nach Entfernen der Akkueinheit stromlos sind. Dies ist ein ganz wesentlicher Sicherheitsaspekt, da bei eventuellen Reparaturarbeiten an dem Elektromotorrad ansonsten Lebensgefahr wegen der hohen, beispielsweise 72 Volt und mehr, von dem Akku ausgehenden Spannung bestünde.

Gemäß einer weiter bevorzugten Weiterbildung der erfindungsgemäßen Akkueinheit weist das Gehäuse Kühlöffnungen zum Kühlen des Akkus auf. Dadurch kann vorteilhaft ein Überhitzen des Akkus vermieden werden.

Gemäß einer weiter bevorzugten Weiterbildung der Akkueinheit weist diese Aluminium auf bzw. besteht aus Aluminium. Mit "Aluminium" sind selbstverständlich auch Aluminiumlegierungen gemeint. Ein solches Gehäuse ist leicht und stabil.

Gemäß einer weiter bevorzugten Weiterbildung des erfindungsgemäßen Elektromotorrads weist der Aufnahmeschacht eine fest installierte, mit dem Stecker der Akkueinheit korrespondierende Buchse bzw. einen fest installierten, mit der Buchse der Akkueinheit korrespondierenden Stecker auf. Die sich aus dieser Weiterbildung ergebenden Vorteile wurden bereits vorstehend erläutert.

Gemäß einer weiter bevorzugten Weiterbildung des erfindungsgemäßen Elektromotorrads ist der Aufnahmeschacht derart vorgesehen, dass die Akkueinheit in der aufgerichteten Stellung des Elektromotorrads von oben in den Aufnahmeschacht einschiebbar und herausziehbar ist. Dies ist insbesondere in ergonomischer Hinsicht vorteilhaft. Ferner erstreckt sich der Aufnahmeschacht vorteilhaft quer zur Fahrtrichtung des Elektromotorrads. Folglich tendiert die Akkueinheit beim Anfahren oder Bremsen, also beim Wirken von Beschleunigungen auf diese, nicht dazu aus dem Aufnahmeschacht herauszurutschen, sondern drückt gegen dessen Seitenwände und ist somit in diesem gut gesichert.

Gemäß einer weiter bevorzugten Weiterbildung des erfindungsgemäßen Elektromotorrads weist dieses eine in Monocoque-Bauweise gefertigte Rahmenstruktur auf, welche den Aufnahmeschacht innerhalb aufweist und die Akkueinheit vorzugsweise im Wesentlichen vollständig fremdpartikelgeschützt aufnimmt. Mit "Monocoque-Bauweise" ist gemeint, dass die Rahmenstruktur in einschaliger Bauweise gefertigt ist, wobei die Rahmenstruktur auch im Wesentlichen alle angreifenden Kräfte, insbesondere den Kraftfluss zwischen einer Vorderradanordnung, einer Hinterradanordnung und dem Fahrer, aufnimmt. In einer derartigen Rahmenstruktur ist viel Platz für einen Aufnahmeschacht. Außerdem kann diese, weil im Wesentlichen geschlossen ausgebildet, die Akkueinheit sehr gut vor Fremdpartikeln schützen.

Gemäß einer weiter bevorzugten Weiterbildung des erfindungsgemäßen Elektromotorrads weist dieses einen Sitz auf, unterhalb dem der Aufnahmeschacht angeordnet ist, wobei der Sitz zum Freigeben des Aufnahmeschachts an der Rahmenstruktur angelenkt ist. Damit ist ein einfacher und schneller Zugriff auf die Akkueinheit zum Wechseln derselben gewährleistet. Gemäß einer weiter bevorzugten Weiterbildung des erfindungsgemäßen Elektromotorrads ist der Sitz vorderradseitig an der Rahmenstruktur angelenkt. Damit ergibt sich ein für ein Motocross-Motorrad günstiger Aufbau bzw. eine günstige Sitzposition für den Fahrer.

Gemäß einer weiter bevorzugten Weiterbildung des erfindungsgemäßen Elektromotorrads kommt der Sitz beim Herunterklappen desselben auf die Rahmenstruktur mit der Akkueinheit wenigstens abschnittsweise diese umgreifend in Eingriff. Dadurch ist die Akkueinheit im heruntergeklappten Zustand des Sitzes insbesondere gegen ein Verrutschen in oder gegen die Fahrtrichtung des Elektromotorrads gesichert.

Gemäß einer weiter bevorzugten Weiterbildung des erfindungsgemäßen Elektromotorrads ist dieses so vorgesehen, dass bei aufgeklapptem Sitz und eingeschobener Akkueinheit spannungsführenden Komponenten, insbesondere alle spannungsführenden Komponenten, weiter bevorzugt der Antrieb und/oder spannungsführende Leitungen, manuell unzugänglich sind. Ein Zugang kann nur durch Herausziehen der Akkueinheit aus dem Aufnahmeschacht und damit Unterbrechen der elektrischen Verbindung zwischen Akkueinheit und den spannungsführenden Komponenten erreicht werden. Somit kann die Gefahr von Stromschlägen bei Reparaturen vermieden werden.

Die Erfindung wird im Folgenden anhand von Ausführungsbeispielen unter Bezugnahme auf die beiliegenden Figuren näher erläutert.

Von den Figuren zeigen:
- Fig. 1: in einer Seitenansicht ein Elektromotorrad gemäß einem Ausführungsbeispiel der vorliegenden Erfin- dung, wobei dieses sich in seiner aufgerichteten Stellung bzw. Fahrstellung befindet;
- Fig. 2: die Ansicht aus Fig. 1, wobei ein Sitz des Motor- rads zum Freigeben einer Akkueinheit bzw. eines Aufnahmeschachts des Motorrads verschwenkt ist;
- Fig. 3: das Motorrad aus der im Vergleich zu Fig. 2 gegenü- berliegenden Richtung gesehen, wobei aus Gründen der Übersichtlichkeit eine Rahmenstruktur des Mo- torrads teilweise nicht dargestellt ist;
- Fig. 4: die Ansicht aus Fig. 2, wobei die Akkueinheit aus dem Aufnahmeschacht entnommen ist;
- Fig. 5: das Motorrad wie in Fig. 4 dargestellt, jedoch von schräg oben gesehen;
- Fig. 6: in einer perspektivischen, vergrößerten Ansicht ei- nen Stecker aus Fig. 5; und
- Fig. 7: in einer perspektivischen, vergrößerten Ansicht ei- ne Buchse aus Fig. 5.

In den Figuren bezeichnen gleiche Bezugszeichen gleiche oder funktionsgleiche Komponenten, soweit nichts Gegenteiliges angegeben ist.

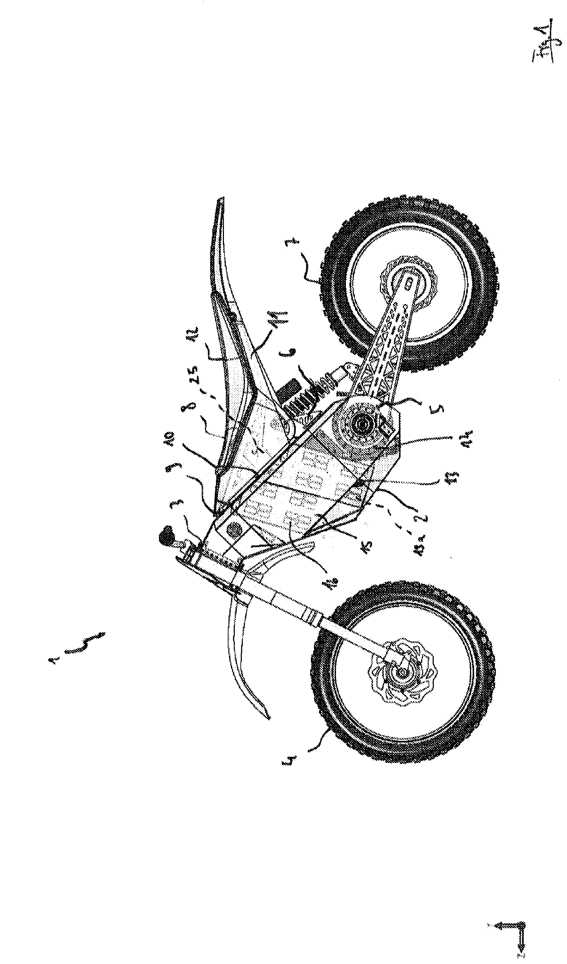

Fig. 1 zeigt in einer Seitenansicht ein Cross-Country-Motorrad 1 mit Elektroantrieb (im Weiteren als Motorrad bezeichnet) gemäß einem bevorzugten Ausführungsbeispiel der vorliegenden Erfindung.

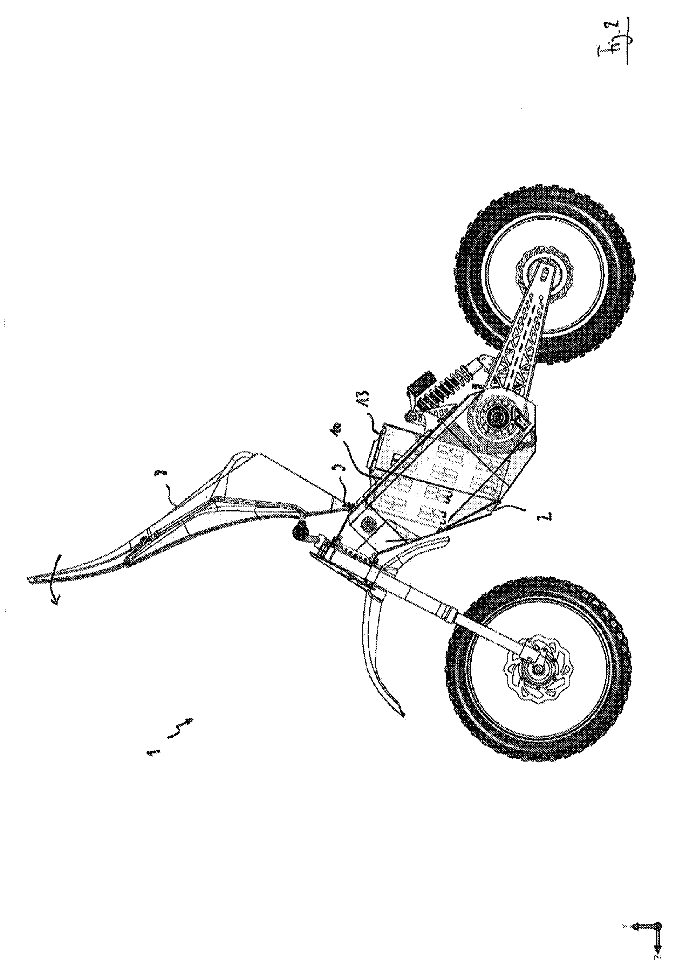

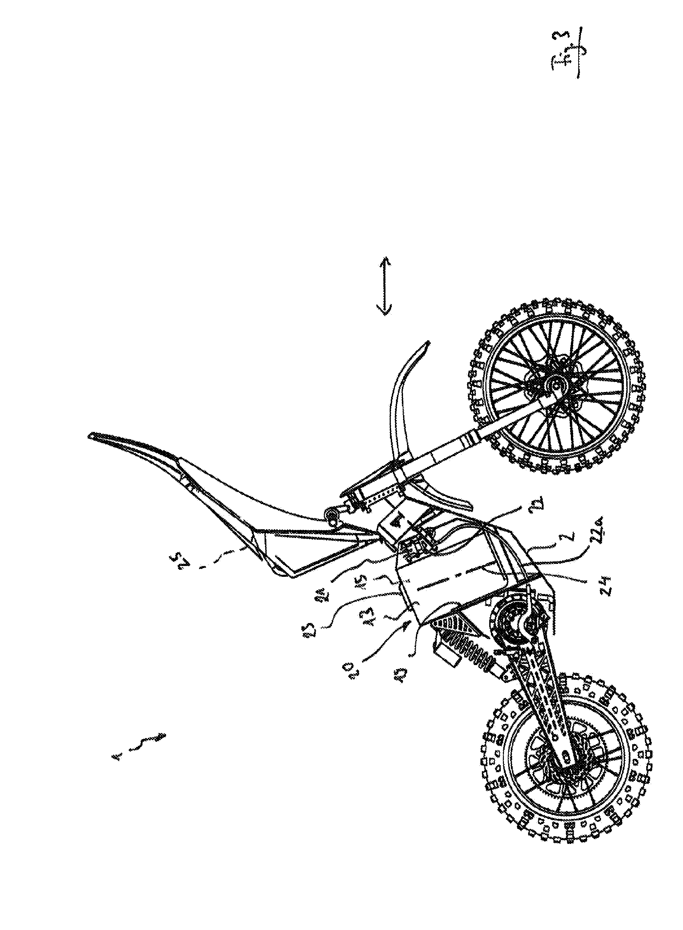

Das Motorrad 1 weist eine in Monocoque-Bauweise gefertigte Rahmenstruktur 2 auf, an welcher Tragmittel 3 zum Tragen einer Vorderradanordnung 4 und Tragmittel 5, 6 zum Tragen einer Hinterradanordnung 7 angebracht sind. Die Rahmenstruktur 2 der Fig. 1 und 2 unterscheidet sich geringfügig von der gemäß den Fig. 3 bis 6, was jedoch für die vorliegende Erfindung ohne Bedeutung ist. Beide Ausführungsarten stellen gute Lösungen dar und sind miteinander kombinierbar.

Ferner ist an der Rahmenstruktur 2 vorzugsweise im Wesentlichen vorderradseitig ein Sitz 8 in einem Gelenkpunkt 9 angelenkt. Der Sitz 8 erstreckt sich von diesem Anlenkpunkt 9 vorzugsweise wenigstens bis zur Mitte der Rahmenstruktur 2 an deren Oberseite 10 entlang und deckt diese somit in der in Fig. 1 dargestellten aufgerichteten Stellung bzw. Fahrstellung wenigstens teilweise ab. Der Sitz 8 ist vorzugsweise als ein Schalenteil 11 mit einer Sitzfläche 12 ausgebildet.

Zur besseren Verständlichkeit ist in Fig. 1 die Rahmenstruktur 2 durchsichtig dargestellt, so dass eine Akkueinheit 13 erkennbar ist. Die Akkueinheit 13 dient der Bereitstellung von Antriebsenergie an einen Antrieb 14, welcher vorzugsweise das Hinterrad des Motorrads 1 antreibt.

Die Akkueinheit 13 umfasst ein vorzugsweise quaderförmiges Gehäuse 15, in welchem ein Akku 13a (nur angedeutet) angeordnet ist. Das Gehäuse weist, wie in Fig. 1 zu erkennen, vorzugsweise eine Vielzahl von Öffnungen 16 auf, um eine Kühlung des Akku 13a zu verbessern. Vorzugsweise ist das Gehäuse 15 aus Aluminium ausgebildet.

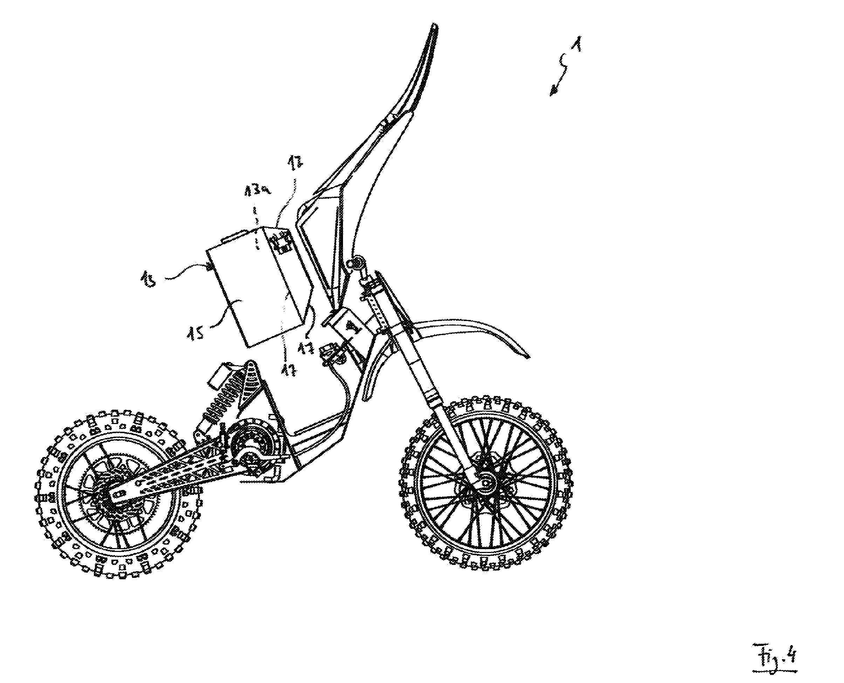

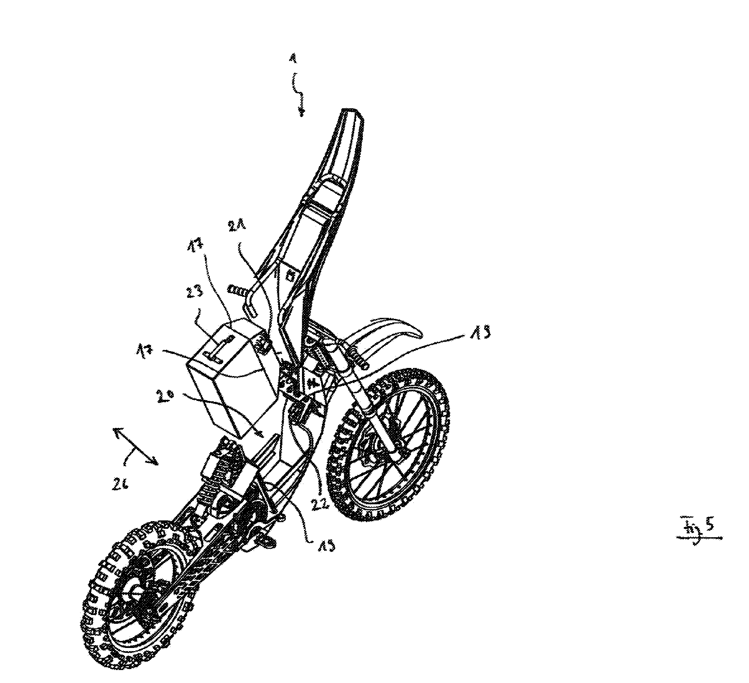

Das Gehäuse 15 weist einen im Grunde kubischen Außenumriss auf, der jedoch, wie in Fig. 4 und 5 gut zu erkennen, entlang vier zusammenhängenden Kanten 17 abgeschrägt ist, sodass sich das Gehäuse 15 im eingeschobenen Zustand, vgl. Fig. 2, vorderradseitig hin verjüngt.

Fig. 2 zeigt nun das Motorrad 1 aus Fig. 1, wobei der Sitz 8 um den Anlenkpunkt 9 in der mit Pfeil gekennzeichneten Richtung nach vorne und nach oben verschwenkt worden ist. Dieser Ansicht ist zu entnehmen, dass die Akkueinheit 13 in der in Fig. 1 dargestellten Fahrstellung in einen von dem Schalenteil 11 des Sitzes 8 gebildeten Hohlraum hineinragt. In Fig. 2 ragt nun die Akkueinheit 13 wenigstens teilweise aus der Rahmenstruktur 2 heraus und ist daher für einen Wechseln der Akkueinheit 13 einfach zugänglich.

Fig. 3 zeigt das Motorrad 1 aus Fig. 2, wobei die Rahmenstruktur 2 der Übersichtlichkeit halber nur teilweise dargestellt ist. Wie Fig. 3 zu entnehmen, weist die Rahmenstruktur 2 Führungsabschnitte 19 auf, welche einen Aufnahmeschacht 20, vgl. Fig. 5, zum Einschieben der Akkueinheit 13 ausbildet. Der Akku 13 kann somit einfach aus dem Aufnahmeschacht 20 herausgezogen werden, vgl. Fig. 4, und wieder in diesen hineingeschoben werden, vgl. Fig. 3, so dass ein einfacher Austausch der Akkueinheit 13 ermöglicht wird.

Wie in Fig. 3 weiter zu erkennen, ist an dem Gehäuse 15 ein Stecker 21 derart angebracht, dass er beim Einschieben der Akkueinheit 13 in den Aufnahmeschacht 20 mit einer Buchse 22, die fest im Innenraum der Rahmenstruktur 2 vorgesehen ist, elektrisch leitend in Eingriff kommt. Somit werden die Akkus der Akkueinheit 13 auf sehr einfache Weise mit den elektrischen Komponenten des Motorrads 1, beispielsweise dem Antrieb 14, elektrisch leitend verbunden. Ebenso leicht wird diese elektrische Verbindung wieder aufgehoben, wenn die Akkueinheit 13 beispielsweise an einem vorzugsweise an dieser oberseitig angeformten Griff 23 aus dem Aufnahmeschacht 20 wieder herausgezogen wird. Diese herausgezogene Stellung ist auch in Fig. 5 dargestellt, welche das Motorrad 1 aus Fig. 4 von schräg oben gesehen darstellt.

Ferner ist das Motorrad 1 so vorgesehen, dass bei aufgeklapptem Sitz 8 und eingeschobener Akkueinheit 13 alle spannungsführenden Komponenten, insbesondere der Antrieb 14 und spannungsführende Leitungen 22a manuell unzugänglich sind. Insbesondere verdeckt die Akkueinheit 13 dabei einen manuellen Zugang zu dem Antrieb 14 und den spannungsführenden Leitungen 22a. D.h., dass für ein manuelles Erreichen der spannungsführenden Komponenten, bspw. zur Reparatur, zunächst ein Entfernen der Akkueinheit 13 aus dem Aufnahmeschacht 20 erforderlich ist, wobei dadurch die elektrische Verbindung zwischen den Komponenten und der Akkueinheit 13 aufgehoben wird, sodass die Komponenten dann nicht mehr stromführend sind und somit die Gefahr einer Verletzung durch Stromschlag stark verringert bzw. vermieden werden kann.

Wie Fig. 3 ferner zu entnehmen, erstreckt sich der Aufnahmeschacht 20 im Wesentlichen in einer Richtung 24 im Wesentlichen parallel zur Hochrichtung des Motorrads 1 in der Fahrstellung desselben. Mit "im Wesentlichen parallel" ist vorliegend eine Abweichung von der Hochrichtung von vorzugsweise kleiner 45° gemeint, wobei sich die Hochrichtung senkrecht zum Erdboden definiert. Treten nun Beschleunigungen in oder entgegen der Fahrtrichtung, wie mit dem Doppelpfeil in Fig. 3 angedeutet, bei der Fahrt mit dem Motorrad 1 auf, so tendieren die dabei auf die Akkueinheit 13 wirkenden Kräfte nur unwesentlich dazu, diese entlang der Richtung 24 aus dem Aufnahmeschacht zu bewegen. Damit kann die Akkueinheit 13 einfacher in der Rahmenstruktur 2 bzw. in dem Aufnahmeschacht 20 gesichert werden. Vorzugsweise umgreift der Sitz 8 im heruntergeklappten Zustand, s. Fig. 1, die Akkueinheit 13 mit seinem Umgreifungsabschnitt 25 abschnittsweise, sodass diese zusätzlich insbesondere gegen die genannten Beschleunigungen in und entgegen der Fahrtrichtung gesichert ist. Auch eine Sicherung in seitlicher Richtung, s. Doppelpfeil 26 in Fig. 5, kann somit erreicht werden.

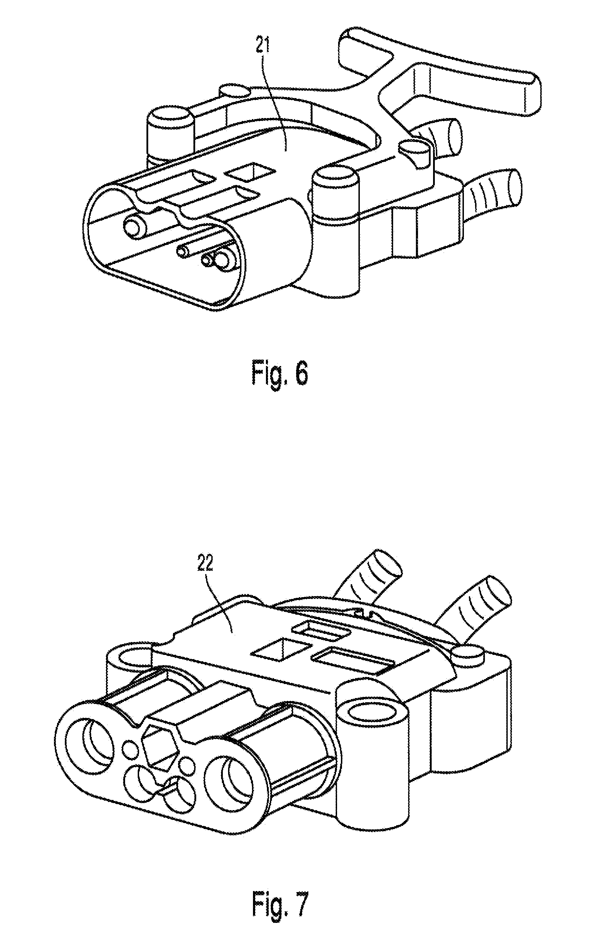

Der Stecker 21 ist beispielhaft in Fig. 6 und die Buchse 22 ist beispielhaft in Fig. 7 vergrößert dargestellt. Vorzugsweise handelt es sich bei solchen Steckern um DIN Norm Stecker, beispielsweise nach der DIN Norm 80A.

### Bezugszeichenliste

- 1: Motorrad
- 2: Rahmenstruktur
- 3: Tragmittel
- 4: Vorderradanordnung
- 5: Tragmittel
- 6: Tragmittel
- 7: Hinterradanordnung
- 8: Sitz
- 9: Anlenkpunkt
- 10: Oberseite
- 11: Schalenteil
- 12: Sitzfläche
- 13: Akkueinheit
- 14: Antrieb
- 15: Gehäuse
- 16: Öffnungen
- 17: Kante
- 19: Führungsschiene
- 20: Aufnahmeschacht
- 21: Stecker
- 22: Buchse
- 22a: Leitung
- 23: Griff
- 24: Erstreckungsrichtung
- 25: Umgreifungsabschnitt
- 26: Richtung

## Patentansprüche

1. Akkueinheit (13) für ein Elektromotorrad (1), mit:
einem Akku (13a) zur Bereitstellung von Antriebsenergie an einen Antrieb (14) des Elektromotorrads (1); und
einem Gehäuse (15), in welchem der Akku (13a) angeordnet ist;
wobei das Gehäuse (15) für ein Einschieben der Akkueinheit (13) in einen Aufnahmeschacht (20) des Elektromotorrads (1) und ein Herausziehen aus demselben geeignet ausgebildet ist.

2. Akkueinheit nach Anspruch 1,
**dadurch gekennzeichnet,**
**dass** das Gehäuse (15) einen im Wesentlichen quaderförmigen äußeren Umriss aufweist, welcher an vier zusammenhängenden Kanten (17) abgeschrägt ist.

3. Akkueinheit nach Anspruch 1 oder 2,
**gekennzeichnet durch,**
einen festinstallierten Stecker (21) oder eine festinstallierte Buchse, welcher bzw. welche beim Einschieben der Akkueinheit (13) in den Aufnahmeschacht (20) selbsttätig mit einer festinstallierten, korrespondierenden Buchse (22) bzw. einem festinstallierten, korrespondierenden Stecker des Aufnahmeschachts (20) für ein elektrisches Verbinden des Akkus (13a) mit dem Antrieb (14) in Eingriff kommt und sich beim Herausziehen aus dem Aufnahmeschacht (20) selbsttätig löst.

4. Akkueinheit nach wenigstens einem der vorhergehenden Ansprüche,
**dadurch gekennzeichnet,**
**dass** das Gehäuse (15) Kühlöffnungen (16) zum Kühlen des Akkus (13a) aufweist.

5. Akkueinheit nach wenigstens einem der vorhergehenden Ansprüche,
**dadurch gekennzeichnet,**
**dass** das Gehäuse (15) Aluminium aufweist.

6. Elektromotorrad (1), mit:
einem Aufnahmeschacht (20); und
einer Akkueinheit (13) nach wenigstens einem der vorhergehenden Ansprüche, welche in den Aufnahmeschacht (20) einschiebbar und aus diesem herausziehbar ist.

7. Elektromotorrad nach Anspruch 6,
**dadurch gekennzeichnet,**
**dass** der Aufnahmeschacht (20) eine festinstallierte, mit dem Stecker (21) der Akkueinheit (13) korrespondierende Buchse (22) bzw. einen festinstallierten, mit der Buchse der Akkueinheit (13) korrespondierenden Stecker aufweist.

8. Elektromotorrad nach Anspruch 6 oder 7,
**dadurch gekennzeichnet,**
**dass** der Aufnahmeschacht (20) derart vorgesehen ist, dass die Akkueinheit (13) in der aufgerichteten Stellung des Elektromotorrads (1) von oben in den Aufnahmeschacht (20) einschiebbar und herausziehbar ist.

9. Elektromotorrad nach wenigstens einem der Ansprüche 6 bis 8,
**gekennzeichnet durch,**
eine in Monocoque-Bauweise gefertigte Rahmenstruktur (2), welche den Aufnahmeschacht (20) innerhalb aufweist und die Akkueinheit (13) fremdpartikelgeschützt aufnimmt.

10. Elektromotorrad nach Anspruch 9,
**gekennzeichnet durch,**
einen Sitz (8) unterhalb dem der Aufnahmeschacht (20) angeordnet ist, wobei der Sitz (8) zum Freigeben des Aufnahmeschachts (20) an der Rahmenstruktur (2) angelenkt ist.

11. Elektromotorrad nach Anspruch 10,
**dadurch gekennzeichnet,**
**dass** der Sitz (8) vorderradseitig an der Rahmenstruktur (2) angelenkt ist.

12. Elektromotorrad nach Anspruch 10 oder 11,
**dadurch gekennzeichnet,**
**dass** der Sitz (8) beim Herunterklappen desselben auf die Rahmenstruktur (2) mit der Akkueinheit (13) wenigstens abschnittsweise diese umgreifend in Eingriff kommt.

13. Elektromotorrad nach wenigstens einem der Ansprüche 9 bis 12,
**dadurch gekennzeichnet,**
**dass** bei aufgeklapptem Sitz (8) und eingeschobener Akkueinheit (13) spannungsführenden Komponenten (14, 22a) des Elektromotorrads (1) manuell unzugänglich sind, wobei ein manueller Zugang zu diesen nur durch Herausziehen der Akkueinheit (13) aus dem Aufnahmeschacht (20) und damit Unterbrechen der elektrischen Verbindung zwischen diesen und der Akkueinheit (13) freigebbar ist.
